# FASCICULE DE BREVET EUROPEEN

(11) **EP 3 055 539 B1**
(45) Date de publication et mention de la délivrance du brevet: **30.08.2017**
(21) Numéro de dépôt: 14790229.0
(22) Date de dépôt: 07.10.2014
(51) Int. Cl.: F02C 7/32

(54) **BOITIER D'ENTRAINEMENT D'ACCESSOIRES POUR TURBOMACHINE**
HILFSGERÄTEGETRIEBE FÜR EINE TURBOMASCHINE
TURBOMACHINE AUXILIARY DRIVE GEARBOX

(30) Priorité: 11.10.2013 FR 1359910
(43) Date de publication de la demande: 17.08.2016
(73) Titulaire: Safran Transmission Systems, 92700 Colombes (FR)
(72) Inventeur: VIEL, Julien, F-95100 Argenteuil (FR); PRUNERA-USACH, Stéphane, 64110 Jurançon (FR)
(74) Mandataire: Cabinet Camus Lebkiri
(86) Numéro de dépôt international: PCT/FR2014/052541
(87) Numéro de publication internationale: WO 2015/052430

(56) Documents cités:
- EP-A2- 2 390 486
- WO-A1-2009/067048
- US-A- 3 266 248
- US-A- 3 638 421
- US-A- 3 835 642
- US-A1- 2006 248 900

## Description

### DOMAINE TECHNIQUE

La présente invention concerne une boite d'entrainement d'accessoires pour turbomachine, également appelé boitier d'engrenage accessoires ou AGB pour « accessory gear box ». Une telle boite d'entraînement d'accessoires est destinée à transmettre le mouvement originaire de la turbomachine par l'intermédiaire d'un arbre radial sortant de celle-ci, et à le transmettre à divers accessoires ou équipements annexes à la turbomachine, tels que des pompes, des générateurs d'électricité, etc., qui sont indispensables au fonctionnement de la turbomachine ou à d'autres appareils d'un aéronef propulsé par cette turbomachine.

### ETAT DE LA TECHNIQUE ANTERIEUR

Le document EP 2 405 116 représente une boite d'entrainement d'accessoires de l'art antérieur. Une telle boite d'entrainement d'accessoires comporte généralement un carter qui contient des pignons reliés entre eux en série de façon à former une chaine cinématique. Chaque pignon est ensuite relié à un arbre d'entrainement qui lui-même entraine en rotation un accessoire. Ainsi, l'arbre d'entrée entraine en rotation un premier pignon, qui lui-même est relié à un ou plusieurs pignons secondaires de manière à les entraîner en rotation, chaque pignon secondaire étant lui-même relié à un ou plusieurs pignons tertiaires de façon à les entraîner en rotation... Ainsi, dans les boites d'entrainement d'accessoires de l'art antérieur, les pignons sont disposés en cascade de sorte que le premier pignon sert non seulement à entrainer en rotation un premier accessoire, mais il permet également de transmettre le mouvement de rotation aux pignons secondaires, tertiaires... Toutefois, une telle boite d'entrainement d'accessoires est très encombrante puisque les pignons sont disposés à côté les uns des autres.

Pour remédier à ce problème, le document FR 2 981 986 décrit une boite d'entrainement d'accessoires qui permet de réaliser un gain de place. Toutefois, dans une telle boite, les pignons sont toujours reliés en série les uns aux autres, de sorte que si un des pignons est défaillant, selon sa localisation, il peut entraîner un disfonctionnement de l'ensemble de la chaine cinématique. Par ailleurs, le premier pignon supporte tous les appels de couple de l'ensemble de la chaine cinématique, ce qui oblige généralement à le sur-dimensionner par rapport à son besoin propre. En effet, dans une telle boite, les pignons amont sont impactés par la puissance transmise aux pignons avals, de sorte qu'il est difficile d'optimiser le dimensionnement de chaque pignon indépendamment des autres pignons.

Le document US 2006/0248900 décrit aussi une boite d'entraînement d'accessoires avec le même problème que dans le cas précédent.

### 10 EXPOSE DE L'INVENTION

L'invention vise à remédier aux inconvénients de l'état de la technique en proposant une architecture de boite d'entrainement d'accessoires qui permette un gain de place d'installation dans la turbomachine et dont le dimensionnement de la chaine cinématique soit optimisée au regard des puissances des accessoires de la turbomachine et de l'aéronef par rapport à celles de l'art antérieur.

Pour ce faire, est proposé selon un premier aspect de l'invention, une turbomachine comportant une boite d'entraînement d'accessoires conformément à la revendication 1. Ainsi, selon l'invention, le mouvement de l'arbre d'entrée n'est plus transmis directement aux pignons, mais il est transmis aux roues dentées coniques des accessoires par l'intermédiaire d'un arbre principal pourvu de pignons coniques. Ces pignons coniques ne permettent pas d'entraîner en rotation directement des accessoires, mais ils permettent d'entraîner en rotation des roues dentées coniques, qui elles-mêmes entraînent en rotation des accessoires. Ainsi, les roues dentées peuvent être dimensionnées uniquement en fonction de la puissance qu'elles transmettent aux accessoires, et non plus en fonction des autres roues dentées. En outre, les pignons ne sont plus reliés directement les uns aux autres, ce qui augmente la fiabilité globale de la boite d'entrainement. Par ailleurs, la présence de l'arbre principal permet un gain de place, puisque les roues dentées coniques peuvent ainsi être disposées de manière circonférentielle autour de l'arbre principal. La boite d'entraînement selon l'invention peut également présenter une ou plusieurs des caractéristiques ci-après prises indépendamment ou selon toutes les combinaisons techniquement possibles :
- l'arbre principal comporte une extrémité distale,
- l'extrémité distale de l'arbre principal est reliée à au moins un accessoire distal ;
- l'accessoire distal s'étend suivant un axe d'entrainement distal,
- l'axe d'entraînement distal de l'accessoire distal est aligné avec l'axe de référence de l'arbre principal ;
- chaque pignon conique entoure l'arbre principal ;
- la boite d'entrainement comporte au moins deux pignons coniques, les deux pignons coniques aptes à entrainer en rotation un ou plusieurs accessoires par l'intermédiaire d'une ou plusieurs roues dentées coniques, les deux pignons coniques étant disposés successivement autour de l'arbre principal.

Avantageusement, la turbomachine comporte en outre une veine primaire dans laquelle s'écoule un flux d'air primaire, généralement haute pression, et une veine secondaire dans laquelle s'écoule un flux d'air secondaire, généralement basse pression.

La boite d'entraînement est de préférence située entre la veine primaire et la veine secondaire, mais elle peut aussi être localisée dans la zone de la soufflante, par exemple autour de la veine secondaire ou dans la zone turbine, par exemple autour de la veine primaire, ou également dans la zone coeur.

Ainsi, selon un premier mode de réalisation, la turbomachine comporte une zone fan, la boite d'entrainement d'accessoires étant située dans la zone fan. La zone fan est une zone située à proximité de la soufflante.

Selon un autre deuxième mode de réalisation, la turbomachine comporte une zone turbine, la boite d'entrainement d'accessoires étant située dans la zone turbine.

Selon un troisième mode de réalisation, la turbomachine comporte une zone core, la boite d'entrainement d'accessoires étant située dans la zone core.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une vue en perspective d'une boite à entraînement d'accessoires selon un mode de réalisation de l'invention;
- La figure 2, une vue de dessus de la boite d'entrainement d'accessoires de la figure 1 ;
- La figure 3, une vue en perspective d'une boite à entrainement d'accessoires selon un autre mode de réalisation de l'invention ;
- La figure 4, une vue de face d'une partie de turbomachine selon un mode de réalisation de l'invention ;
- La figure 5, une vue en perspective de la partie de turbomachine de la figure 4.

Pour plus de clarté, les éléments identiques ou similaires sont repérés par des signes de références identiques sur l'ensemble des figures.

### DESCRIPTION DETAILLEE D'AU MOINS UN MODE DE REALISATION

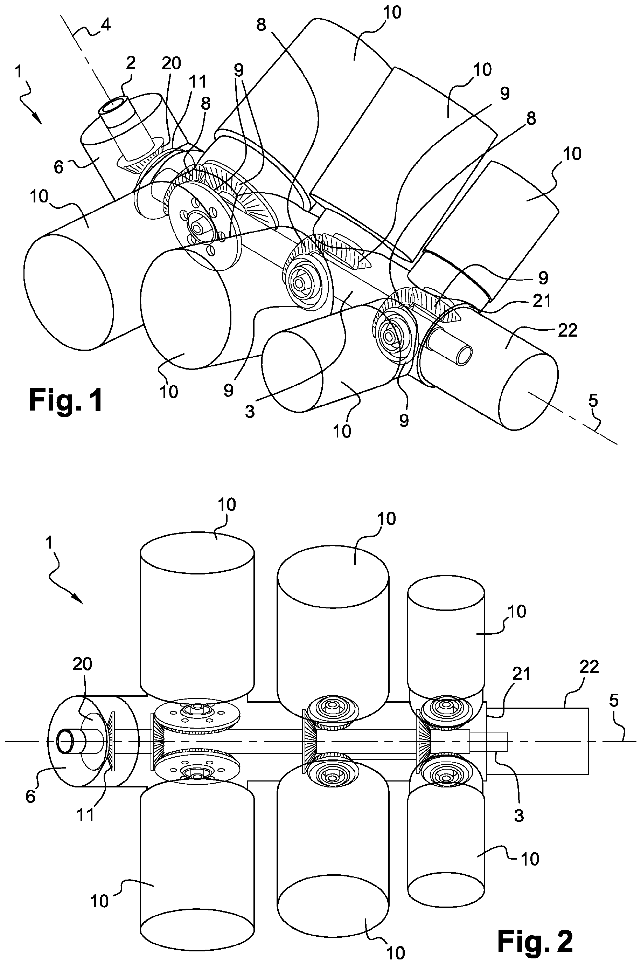

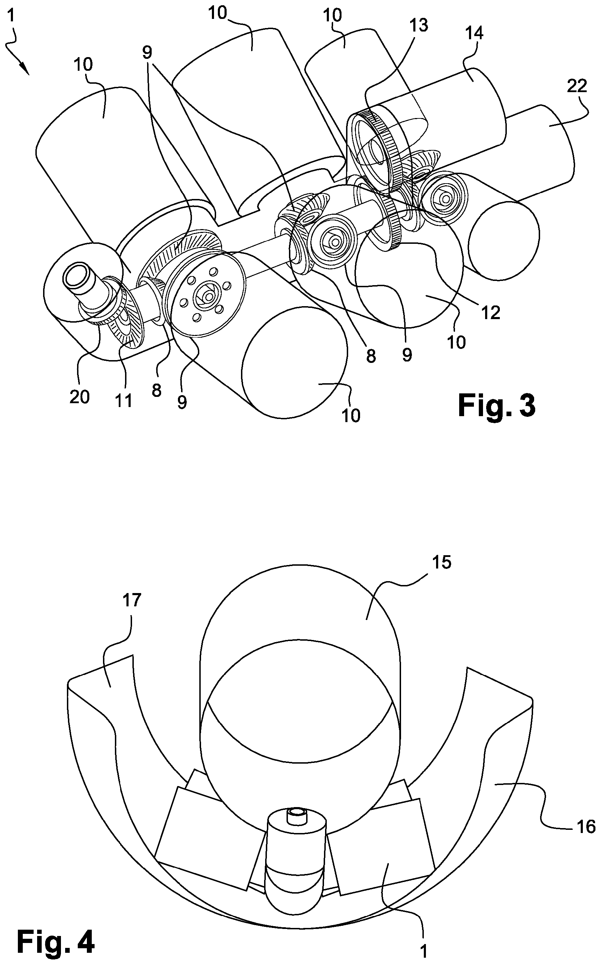

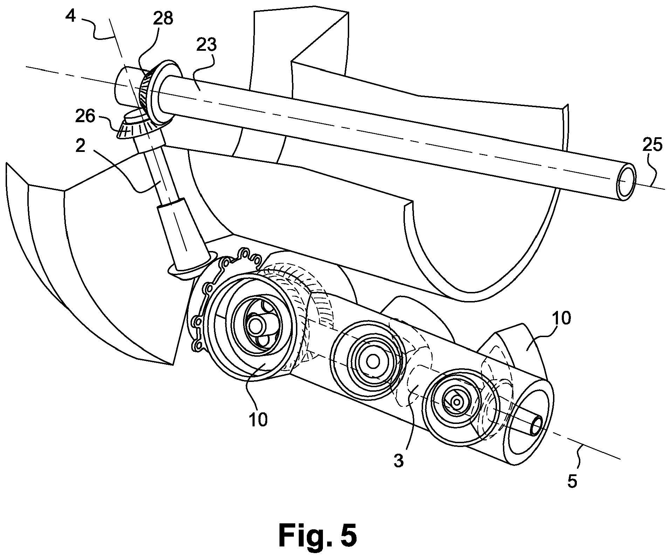

Les figures 1 et 2 représentent une boite d'entrainement d'accessoires 1 selon le mode de réalisation préférentiel de l'invention. Les figures 4 et 5 représentent cette boite d'entraînement intégrée dans la zone core d'une turbomachine. Cette boite d'entraînement d'accessoires 1 comporte un arbre d'entrée 2 qui est relié à un arbre moteur 23 d'une turbomachine de façon à être entraîné en rotation lorsque l'arbre moteur 23 est en rotation. Pour cela, l'arbre d'entrée 2 est solidaire d'un pignon 26, tandis que l'arbre moteur 23 est solidaire d'un pignon 28. Le pignon 26 solidaire de l'arbre d'entrée engrène avec le pignon 28 solidaire de l'arbre moteur 23. Les pignons 26 et 28 sont de préférence coniques de sorte qu'ils forment un renvoi d'angle entre la direction suivant laquelle s'étend l'arbre moteur et la direction suivant laquelle s'étend l'arbre d'entrée.

L'arbre moteur 23 peut en particulier être un arbre du corps haute pression d'une turbomachine. L'arbre moteur 23 s'étend suivant un axe dit « axe moteur » 25. L'arbre d'entrée 2 s'étend suivant un premier axe de référence, appelé « axe d'entrée » 4 dans la suite. L'axe d'entrée 4 s'étend suivant une direction sécante à la direction suivant laquelle s'étend l'axe moteur 25.

La boite d'entrainement 1 comporte des accessoires 10. Ces accessoires peuvent par exemple être une pompe carburant, un groupe de lubrification une machine électrique. Elle permet de transmettre le mouvement de l'arbre d'entrée 2 aux accessoires 10.

Pour cela, la boite d'entraînement 1 comporte un arbre principal 3 qui s'étend suivant un axe de référence 5. Dans ce document, les termes « axial » ou « longitudinal » sont utilisés en référence à cet axe de référence 5.

L'arbre principal 3 est relié à l'arbre d'entrée 2 par une boite de transfert 6, également appelée « transfert gear box » ou TGB. Cette boite de transfert 6 permet d'effectuer un renvoi d'angle entre l'axe d'entrée 4 et l'axe de référence 5 de l'arbre principal, et ainsi de transmettre le mouvement de rotation de l'arbre moteur à l'arbre principal. Ce renvoi d'angle est réalisé par l'intermédiaire d'un premier pignon conique 20 et d'une première roue dentée conique 11. Le premier pignon conique 20 et la première roue dentée conique 11 permettent de régler l'angle voulu entre l'axe d'entrée 4 et l'axe de référence 5. Dans un mode de réalisation préférentiel, la première roue dentée conique 11 est assemblée à l'arbre principal 3.

Avantageusement, un premier renvoi d'angle est effectué entre l'arbre moteur 23 et l'arbre d'entrée 2, et un deuxième renvoi d'angle est effectué entre l'arbre d'entrée 2 et l'arbre principal 3. L'arbre principal 3 s' étend donc sensiblement parallèlement à l'arbre moteur 23.

La boite d'entraînement d'accessoires 1 comporte également des pignons coniques 8 solidaires de l'arbre principal 3. Le mouvement de rotation est transmis aux accessoires 10 par l'intermédiaire de roues dentées coniques 9, reliées aux accessoires 10, engrenant avec les pignons coniques 8. Dans une disposition préférentielle, les pignons coniques 8 sont disposés autour de l'arbre principal 3. Les pignons coniques 8 sont disposés les uns après les autres suivant la direction longitudinale.

Avantageusement, au moins un pignon conique 8 permet d'entraîner en rotation simultanément deux accessoires. Pour ce faire, ledit pignon conique engrène simultanément avec deux roues dentées 9.

Ainsi, chaque pignon conique 8 permet d'entraîner en rotation un ou plusieurs accessoires 10 simultanément. L'angle formé par les accessoires 10 engrenant sur un même pignon conique 8 peut être choisi en fonction de l'espace disponible pour la boite d'entraînement. Chaque accessoire 10 s'étend suivant une direction sécante à l'axe de référence 5. Les accessoires 10 forment ainsi des branches qui rayonnent autour de l'arbre principal 3.

Ainsi, la boite d'entraînement 1 peut comporter un ou plusieurs groupes d'accessoires s'étendant radialement par rapport à l'axe de référence, ces groupes étant répartis suivant la direction longitudinale. Dans un mode particulier de réalisation l'arbre principal 3 peut ne comporter qu'un seul pignon conique 8 et qu'un seul groupe d'accessoire.

Dans une conception particulière au moins une extrémité 21 de l'arbre principal 3 peut être pourvue d'un accessoire appelé « accessoire distal » 22 dont l'axe d'entrainement appelé « axe d'entraînement distal » est colinéaire à l'axe de référence 5.

La figure 3 représente un autre mode de réalisation dans lequel l'arbre principal 3 comporte un pignon droit 12, permettant d'entraîner en rotation un accessoire additionnel 14, par l'intermédiaire d'un pignon droit 13 s'étendant suivant une direction parallèle à l'axe de référence 5. Dans une conception particulière, ces pignons 12, 13 à axes parallèles peuvent être hélicoïdaux.

Le fait d'utiliser un arbre principal 3 pourvu de pignons coniques 8 comme intermédiaire pour transmettre le mouvement de l'arbre d'entrée aux roues dentées coniques solidaires des accessoires permet donc d'avoir plus de possibilités d'agencement pour la boite d'entraînement. En effet, la présence de l'arbre principal permet d'adapter la forme de la boite d'entraînement à l'espace disponible pour la boite d'entraînement dans la turbomachine.

La figure 4 représente une partie d'une turbomachine comportant une paroi de forme généralement circulaire 15 et une paroi de forme généralement de révolution 16. La paroi 15 délimite une veine primaire dans laquelle s'écoule le flux primaire de la turbomachine, généralement le flux d'air haute pression. La paroi 16 délimite la veine secondaire dans laquelle s'écoule le flux secondaire de la turbomachine, généralement le flux d'air basse pression. La paroi 16 entoure la paroi 15 de sorte qu'un espace 17 est défini entre ces deux parois. L'angle entre les accessoires 10 et la géométrie des pignons 8 et 9 sont choisis de façon à ce que la boite d'entraînement entre dans cet espace 17.

Naturellement, l'invention n'est pas limitée aux modes de réalisation décrits en référence aux figures et des variantes pourraient être envisagées sans sortir du cadre de l'invention.

## Revendications

1. Turbomachine comportant :
- un arbre moteur ;
- une boite d'entrainement (1) d'accessoires (10) pour turbomachine d'aéronef comportant :
∘ un arbre d'entrée relié à l'arbre moteur par un engrenage de façon à ce que l'arbre d'entrée soit entraîné en rotation lorsque l'arbre moteur est entraîné en rotation, l'arbre d'entrée s'étendant suivant une direction sécante à celle de l'arbre moteur ;
∘ un premier pignon conique (20) relié à l'arbre d'entrée ;
∘ - un arbre principal (3) solidaire de plusieurs pignons coniques (8) aptes à entraîner en rotation plusieurs accessoires (10) par l'intermédiaire de plusieurs roues dentées coniques (9), l'arbre principal s'étendant suivant une direction parallèle à celle de l'arbre moteur, les accessoires s'étendant suivant une direction sécante à la direction suivant laquelle s'étend l'arbre principal
- une première roue dentée conique (11) formant un renvoi d'angle avec le premier pignon conique, la première roue dentée conique (11) étant reliée à l'arbre principal (3), l'arbre principal s'étendant suivant un axe de référence (5), l'arbre principal (3) comportant un pignon droit (12) engrenant avec un pignon (13) d'un accessoire additionnel (14) s'étendant suivant un axe d'entraînement, l'axe d'entrainement étant parallèle à l'axe de référence (5) de l'arbre principal (3).

2. Turbomachine selon la revendication précédente, dans laquelle l'arbre principal s'étend suivant un axe de référence (5), l'arbre principal (3) comportant une extrémité distale (21), l'extrémité distale (21) de l'arbre principal étant reliée à au moins un accessoire distal (22) s'étendant suivant un axe d'entrainement distal, l'axe d'entraînement distal de l'accessoire distal étant aligné avec l'axe de référence de l'arbre principal.

3. Turbomachine selon l'une des revendications précédentes, dans laquelle chaque pignon conique (8) entoure l'arbre principal (3).

4. Turbomachine selon l'une des revendications précédentes, comportant au moins deux pignons coniques (8), les deux pignons coniques aptes à entrainer en rotation un ou plusieurs accessoires (10) par l'intermédiaire d'une ou plusieurs roues dentées coniques (9), les deux pignons coniques étant disposés successivement autour de l'arbre principal (3).

5. Turbomachine selon la revendication précédente, comportant en outre une veine d'air primaire, et une veine d'air secondaire, la boite d'entraînement étant située entre la veine primaire et la veine secondaire.

6. Turbomachine selon la revendication 3, dans laquelle la turbomachine comporte une zone fan, la boite d'entrainement (1) d'accessoires étant située dans la zone fan.

7. Turbomachine selon la revendication 3, dans laquelle la turbomachine comporte une zone turbine, la boite d'entrainement (1) d'accessoires étant située dans la zone turbine.

8. Turbomachine selon la revendication 3, dans laquelle la turbomachine comporte une zone core, la boite d'entrainement (1) d'accessoires étant située dans la zone core.

## Patentansprüche

1. Strömungsmaschine bestehend aus:
- einer Motorwelle ;
- einer Antriebswelle (1) für Hilfsmaschinen (10) einer Luftfahrzeug-Strömungsmaschine bestehend aus:
o einer Eingangswelle, die über eine Verzahnung so mit der Motorwelle verbunden ist, dass die Eingangswelle in Drehung versetzt wird, wenn sich die Motorwelle dreht, wobei sich die Eingangswelle mit der Motorwelle in Sekantenrichtung überschneidet;
o einem ersten Kegelritzel (20), das mit der Eingangswelle verbunden ist;
o einer Hauptwelle (3), die mit mehreren Kegelritzeln (8) verbunden ist, die wiederum in der Lage sind über mehrere Kegelzahnräder (9), mehrere Hilfsmaschinen in Drehung zu versetzen, wobei sich die Hauptwelle in paralleler Richtung zur Antriebswelle ausdehnt und die Hilfsmaschinen sich in Sekantenrichtung mit der Hauptwelle überschneiden
o einem ersten Kegelzahnrad (11), das mit dem ersten Kegelritzel ein Winkelgetriebe bildet, wobei das erste Kegelzahnrad (11) mit der Hauptwelle (3) verbunden ist, die Hauptwelle sich gemäß einer Bezugsachse (5) ausdehnt, die Hauptwelle (3) aus einem Kronenrad (12) besteht, das mit einem Ritzel (13) einer zusätzlichen Hilfsmaschine (14) in Eingriff steht, die sich gemäß einer Antriebsachse ausdehnt, wobei die Antriebsachse parallel zur Bezugsachse (5) der Hauptwelle (3) verläuft.

2. Strömungsmaschine gemäß dem vorherigen Patentanspruch, in der sich die Hauptwelle über eine Bezugsachse (5) ausdehnt, wobei die Hauptwelle ein distales Endstück (21) umfasst, wobei das distale Endstück (21) der Hauptwelle wiederum mindestens mit einer distalen Hilfsmaschine (22) verbunden ist, die sich gemäß einer distalen Antriebsachse ausdehnt, wobei die distale Antriebsachse der Hilfsmaschine nach der Bezugsachse der Hauptwelle ausgerichtet ist.

3. Strömungsmaschine gemäß einem der vorherigen Patentansprüche, in der jedes Kegelritzel (8) die Hauptwelle (3) umgreift.

4. Strömungsmaschine gemäß einem der vorherigen Patentansprüche, mindestens bestehend aus zwei Kegelritzeln (8), wobei die zwei Kegelritzel in der Lage sind, eine oder mehrere Hilfsmaschinen (10) in Drehung zu versetzen, mit Hilfe eines oder mehreren Kegelzahnrädern (9), dabei sind die zwei Kegelritzel hintereinander um die Hauptwelle (3) angeordnet.

5. Strömungsmaschine gemäß dem vorherigen Patentanspruch, ferner bestehend aus einem Primärluftkanal und einem Sekundärluftkanal, wobei sich die Antriebswelle zwischen dem Primärluft- und dem Sekundärluftkanal befindet.

6. Strömungsmaschine gemäß Patentanspruch 3, in der die Strömungsmaschine über eine Gebläsezone verfügt, wobei sich die Antriebswelle (1) für Hilfsmaschinen in der Gebläsezone befindet.

7. Strömungsmaschine gemäß Patentanspruch 3, in der die Strömungsmaschine über eine Turbinenzone verfügt, wobei sich die Antriebswelle (1) für Hilfsmaschinen in der Turbinenzone befindet.

8. Strömungsmaschine gemäß Patentanspruch 3, in der die Strömungsmaschine über eine Kernzone verfügt, wobei sich die Antriebswelle (1) für Hilfsmaschinen in der Kernzone befindet.

## Claims

1. Turbomachine comprising:
- a drive shaft;
- a gearbox (1) for the driving of auxiliaries (10) for an aircraft turbomachine comprising:
∘ an input shaft connected to the drive shaft by a gear in such a way that the input shaft is driven in rotation when the drive shaft is driven in rotation, with the input shaft extending along a direction secant to that of the drive shaft;
∘ a first bevel pinion (20) connected to the input shaft;
∘ a main shaft (3) secured to several bevel pinions (8) able to drive several auxiliaries (10) in rotation by the intermediary of several bevel gear wheels (9), the main shaft extending along a direction parallel to that of the drive shaft, with the auxiliaries extending along a direction secant to the direction according to which the main shaft extends;
∘ a first bevel gear wheel (11) forming an angle gear with the first bevel pinion, with the first bevel gear wheel (11) being connected to the main shaft (3), with the main shaft extending along a reference axis (5), with the main shaft (3) comprising a straight pinion (12) meshing with a pinion (13) an additional auxiliary (14) extending along a drive axis, with the drive axis being parallel to the reference axis (5) of the main shaft (3).

2. Turbomachine as claimed in the preceding claim, wherein the main shaft extends along a reference axis (5), with the main shaft (3) comprising a distal end (21), with the distal end (21) of the main shaft being connected to at least one distal auxiliary (22) extending along a distal drive axis, with the distal drive axis of the auxiliary being aligned with the reference axis of the main shaft.

3. Turbomachine according to one of the preceding claims, wherein each bevel pinion (8) surrounds the main shaft (3).

4. Turbomachine according to one of the preceding claims, comprising at least two bevel pinions (8), with the two bevel pinions able to drive one or several auxiliaries (10) in rotation by the intermediary of one or several bevel gear wheels (9), with the two bevel pinions being arranged successively about the main shaft (3).

5. Turbomachine as claimed in the preceding claim, further comprising a primary air stream, and a secondary air stream, with the gearbox being located between the primary stream and the secondary stream.

6. Turbomachine according to claim 3, wherein the turbomachine comprises a fan zone, with the gearbox (1) for the driving of auxiliaries being located in the fan zone.

7. Turbomachine according to claim 3, wherein the turbomachine comprises a turbine zone, with the gearbox (1) for the driving of auxiliaries being located in the turbine zone.

8. Turbomachine according to claim 3, wherein the turbomachine comprises a core zone, with the gearbox (1) for the driving of auxiliaries being located in the core zone.
